# EUROPEAN PATENT SPECIFICATION

(11) **EP 0 662 779 B1**
(45) Date of publication and mention of the grant of the patent: **13.11.1996**
(21) Application number: 93922619.7
(22) Date of filing: 22.09.1993
(51) Int. Cl.: A01K 1/01

(54) **CONTAINER FOR DOMESTIC ANIMALS PROVIDED WITH AIR PURIFYING/IONISING DEVICE**
BEHÄLTER FÜR HAUSTIERE MIT EINER VORRICHTUNG ZUR LUFTREINIGUNG/IONISIERUNG
CHAMBRE POUR ANIMAUX DOMESTIQUES, POURVUE D'UN DISPOSITIF PURIFICATEUR D'AIR ET IONISANT

(30) Priority: 29.09.1992 IT VR920082
(43) Date of publication of application: 19.07.1995
(73) Proprietor: FERPLAST SPA, I-36070 Castelgomberto (IT)
(72) Inventor: VACCARI, Carlo, I-36070 Castelgomberto (IT)
(74) Representative: Petraz, Gilberto Luigi
(86) International application number: IT9300100
(87) International publication number: WO9407359

(56) References cited:
- EP-A- 0 345 498
- DE-U- 8 816 130
- GB-A- 2 191 377
- US-A- 5 140 948
- DATABASE WPI Week 8439, Derwent Publications Ltd., London, GB; AN 84-241187 & JP,A,59 145 015 (INOUE JAPAX) 20 August 1984
- DATABASE WPI Week 8441, Derwent Publications Ltd., London, GB; AN 84-256552 & WO,A,84 03634 (NAITO) 27 September 1984

## Description

### TECHNICAL FIELD

The present invention relates to an animal housing for domestic animals according to the preamble of claim 1.

More particularly, the present invention relates to an animal housing consisting of a container suitable for receiving one or more domestic animals, e.g. either a so-called toilet for cats, or a dog's bed, or a cage for birds, rodents etc., said container being provided with an air purifying/ionising device having the main purpose of eliminating bad smells emanated by the pets and by their excrements.

The invention may be mainly applied in manufacturing of articles for domestic animals.

### BACKGROUND ART

The problem due to the efflux of bad smells emanated by excrements of domestic animals, particularly of household pets such as cats, small birds, rodents is well known in the art.

In the specific case of household pets such as cats, in order to solve the problem the known technique provides for the use of substantially closed containers having an animal admittance opening which is generally shut by a swinging door.

Inside of the container is placed a bedstead made of sand or of other granulous material in order to allow the animal to cover up the excrements.

This solution has revealed to be as not satisfying, since bad smells come anyway out of the container, and the granulous material should anyway be replaced every day.

According to another solution known in the art, the upper part of the container is provided with an opening in which an active coal filtering device is inserted, which should theoretically filter and adsorb the bad smells emanated inside of the container.

However, it could be ascertained that this solution is valid only from a merely theoretical point of view: actually, a remarkable quantity of bad smells flows anyway out of the container, and the granulous material must be replaced every day.

Furthermore, the active coal filter must be replaced very often, and this causes remarkable costs.

Document JP-A-59145015 discloses a deodoriser suitable for being mounted in the inner side of the lid of a garbage box. The deodoriser is provided with a ioniser generating ions which fall onto the garbage.

Document GB-A-2191377 discloses a cat litter box comprising a tray and a removable cover. The cover is of larger dimensions in plan than the tray and is provided with a canopy projectiong beyond the tray so that and entrance is formed for the animal between the tray and the canopy. An air outlet associated with a recess from the cover is adapted to receive a charcoal filter for removing any odours entrained in the air.

### DESCRIPTION OF THE INVENTION

The present invention aims to obviate to the disadvantages and drawbacks which are typical of the background art, and to provide, thus, for a simple and low-cost solution to the given problem, eliminating then the bad smells exhaled inside of animal housings for domestic animals.

The animal housing according to the invention is characterised in that the container comprises an air purifying/ionising device suitable for generating ions and for precipitating then heavy gaseous molecules and particles, thereby eliminating bad smells emanated inside of said container.

The dependent claims describe particularly advantageous forms of embodiment of the invention.

The animal housing according to the invention is provided with an air purifying/ionizing device cooperating with the housing itself.

It is known that the purifying/ionizing devices are suitable for generating negative ions which act in such a way as to substantially precipitate heavy particles and molecules, which settle on the ground as extra-fine dust.

When applied in cooperation with an animal housing for domestic animals and, in a preferred form of embodiment, with a so-called cat's toilet, the ionizing device precipitate the gas particles which cause bad smells, thereby acheving the purpose of the invention.

Tests carried out by the applicant could ascertain that more than just eliminating bad smells, it is obtained that the granulous material forming the bedstead may be replaced only after two or three days, thereby contributing to realise remarkable savings.

### ILLUSTRATION OF DRAWINGS

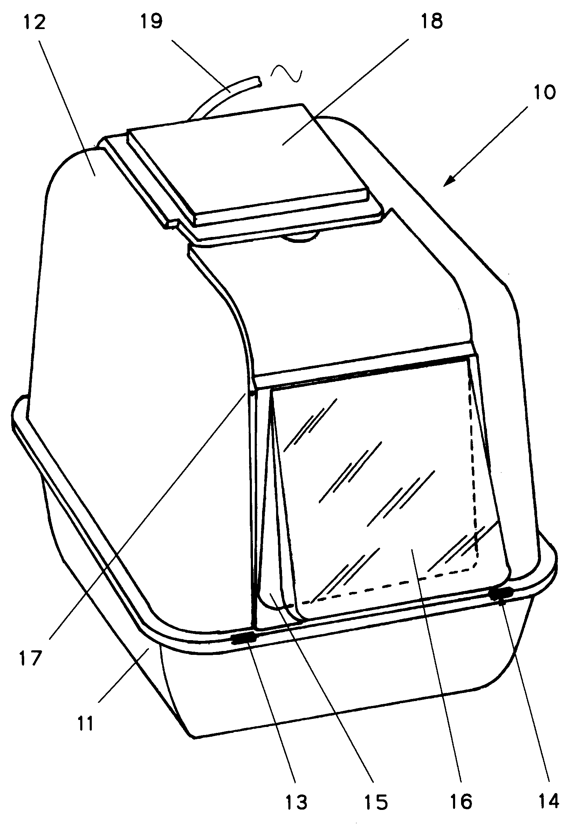

Other features and advantages of the invention will become apparent by reading the following description of a form of embodiment of the invention, given as a non-limiting example, with the help of the drawing illustrated in the annexed sheet which shows, in a schematical perspective view, an animal housing constituted by a container forming a cat's toilet according to the invention.

### DETAILED DESCRIPTION OF A FORM OF EMBODIMENT

In the figure, reference sign 10 generally indicates an animal housing constituted by a container, which is generally made of a molded synthetic material and which constitutes a cat's toilet.

Container 10 comprises a vessel 11, whose internal part is suitable for receiving a granulous material, e.g. sand, forming a bedstead.

Above vessel 11 is placed an element 12 forming a lid; the bottom of lid 12 which contacts vessel 11 is provided with a series of slots 13, 14 suitable for allowing the insertion of tongues which are provided in correspondance of the edge of vessel 11.

Once the tongues are inserted in the slots 13, 14, vessel 11 and lid forming element 12 are fastened to each other and the assembly may be carried by means of a suitable handle (not shown in the figure) which is provided on the upper part of element 12.

Conventionally, element 12 is provided in its front part, with an admittance opening 15 allowing a cat to be admitted inside of container 10.

Such opening 15 is generally shut by means of a door 16, made of a transparent material, which swings about pivots 17 which are horizontally placed in correspondance of the upper part of opening 15.

According to the invention, the upper part of lid forming element 12 comprises a second opening in which is placed a purifying/ionizing device 18; the latter generally comprises a suitable electronics for generating negative ions and a voltage transformer for feeding said electronics, the primary winding of the transformer being connected to the mains by means of a suitable cable 19.

It appears to be clear that the presence of a second opening is not strictly necessary, since the purifying/ionizing device may be placed in a suitable seat which is therefor provided inside of container 10.

According to a form of embodiment of the invention, a microswitch (not shown in the figure) is connected to device 18; said microswitch is placed close to admittance door 16 and it closes the circuit when the animal enters container 10.

Once the animal walks out of the container, the microswitch is operated again, thereby opening the circuit and switching th current off.

The operation of the device is apparent on the base of the preceding description and it does not need further explanations.

The invention has been previously described with reference to a particularly advantageous form of embodiment thereof, since inside of a cat's toilet the purifying/ionising device may carry out at best its functions of eliminating bad smells, by acting in a closed place of small dimensions.

However, the invention is not limited to the previously described form of embodiment, and the purifying/ionising device may be associated to any other animal housing, thereby achieving remarkable results in eleminating bad smells.

This is the case, by way of example, of bird or rodent (rabbit, hamster, etc.) cages, of dog's houses, of containers for carrying small animals etc..

Furthermore, in the previously described form of embodiment the purifying/ionising device is placed upon the container; it is clear that such device may be placed in any location of the animal housing, according to the housing's design and to the available room.

## Claims

1. An animal housing, such as a cat's toilet, a dog's bed, a cage for birds and/or rodents, suitable for accomodating one or more living domestic animals and consisting of a container (10), characterised in that the container (10) comprises an air purifying/ionizing device (18) suitable for generating ions and for precipitating then heavy gaseous molecules and particles, thereby eliminating bad smells emanated inside of said container.

2. Animal housing according to claim 1, advantageously constituting a cat's toilet, characterized in that said container (10) comprises a vessel (11) suitable for containing a granulous material and a lid forming element (12) releasably fastened to said vessel, said element (12) being provided with a first opening (15) for allowing admittance of the animal, and in that said lid forming element (12) is provided with a seat in which said purifying/ionizing device (18) is placed.

3. Animal housing according to claim 2, characterised in that said first opening (15) is closable by means of a suitable door (16) which may be operated by the animal.

4. Animal housing according to claim 3, characterised in that a microswitch is placed close to said door (16) in such a way as to selectively open or close the electrical circuit of said purifying/ionising device (18).

## Patentansprüche

1. Eine Tierhütte, wie z.B. eine Katzentoilette, eine Hundehütte oder ein Käfig für Vögel und/oder Nagetiere, zur Aufnahme von einem oder mehreren lebenden Haustieren, wobei diese Tierhütte sich aus einem Behälter (10) zusammensetzt, dadurch gekennzeichnet, daß der Behälter (10) eine Vorrichtung zur Luftreinigung/Ionisirung (18) umfaßt, die dazu geeignet ist, Ionen zu erzeugen und nachher die schweren gashaltigen Molekülen und Teilchen niederzuschlagen, wobei die üblen Gerüche innerhalb des Behälters beseitigt werden.

2. Tierhütte nach Anspruch 1, die vorteilhafterweise eine Katzentoilette zusammensetzt, dadurch gekennzeichnet, daß der Behälter (10) ein Gefäß (11) zum Enthalten von einem körnigen Material, wie auch einen Deckelteil (12), der ausklinkbar dem Gefäß gesichert ist, umfaßt, wobei der Deckelteil (12) mit einer ersten Öffnung (15), um den Eintritt des Tieres zu erlauben, versehen ist, und daß der Deckelteil (12) mit einem Sitz in dem die Vorrichtung zur Luftreinigung/Ionisirung angebracht ist, versehen ist.

3. Tierhütte nach Anspruch 2 dadurch gekennzeichnet, daß die erste Öffnung (15) mittels einer geeigneten Tür (16) schließbar ist, die vom Tier betätigt werden kann.

4. Tierhütte nach Anspruch 3 dadurch gekennzeichnet, daß ein Mikroschalter neben der Tür (16) angebracht ist, so daß der elektrische Kreis der Vorrichtung zur Luftreinigung/Ionisirung (18) selektiv geöffnet oder geschlossen wird.

## Revendications

1. Un abri pour animaux, tel qu'une toilette pour chats, une niche à chien, une cage pour oiseaux et/ou rongeurs, apto au logement d'un ou plusieurs animaux domestiques vivants, constitué par un récipient (10), caractérisé en ce que le récipient (10) comporte un dispositif purificateur d'air et ionisant (18) apte à l'engendrement d'ions et à la précipitation suivante de molécules gazeuses et de particules lourdes, tout en éliminant ainsi les mauvais odeurs émanés à l'intérieur dudit récipient.

2. Abri pour animaux selon la revendication 1, avantageusement constitué par une toilette pour chats, caractérisé en ce que ledit récipient (10) comporte un vase (11) apte à contenir un matériau granuleux et un élément formant un couvercle (12) fixé de façon relâchable audit vase, ledit élément (12) étant pourvu d'une première ouverture (15) permettant l'accès de l'animal, en en ce que ledit élément formant un couvercle (12) est doté d'une siège dans laquelle est placé ledit dispositif purificateur et ionisant (18).

3. Abri pour animaux selon la revendication 2, caractérisé en ce que ladite première ouverture (15) peut être obturée au moyen d'une porte opportune (16) qui peut être actionnée par l'animal.

4. Abri pour animaux selon la revendication 3, caractérisé en ce que un microinterrupteur est placé au voisinage de ladite porte (16) de façon à ouvrir ou fermer sélectivement le circuit électrique dudit dispositif purificateur et ionisant (18).
